# EUROPÄISCHE PATENTANMELDUNG

(11) **EP 1 900 291 A2**
(43) Veröffentlichungstag der Anmeldung: **19.03.2008**
(21) Anmeldenummer: 07116432.1
(22) Anmeldetag: 14.09.2007
(51) Int. Cl.: A23L 1/10, A23L 1/317, B65B 25/06

(54) **Knödel**

(30) Priorität: 14.09.2006 DE 102006043180
(71) Anmelder: Ofner, Eveline, 86971 Peiting (DE)
(72) Erfinder: Großegger, Günter, 86971 Peiting (DE)
(74) Vertreter: Alber, Norbert

(57) **Zusammenfassung**

Ein Knödel wird vorgeschlagen, dessen Knödelmasse zum Teil aus Backwaren wie etwa Brezen und zum Teil aus Weißwurstbrät besteht. Um trotz vorzugsweise abgesenktem Fettgehalt eine leichte und lockere Konsistenz wie bei einer Weißwurst zu erzielen und dennoch eine weitaus bessere Lagerungsfähigkeit und Haltbarkeit, sowohl im gekühlten Zustand als auch im Wärmebad, erfolgt die Abfüllung und Aufbewahrung in einer speziellen Kunstdarmhülle und in einem speziellen Herstellungsverfahren.

## Beschreibung

### I. Anwendungsgebiet

Die Erfindung betrifft einen speziellen Knödel sowie ein Verfahren zu dessen Herstellung und Zubereitung.

### II. Technischer Hintergrund

Der erfindungsgemäße Knödel enthält neben anderen Bestandteilen auch Weißwurstbrät, und ähnelt daher einerseits einer Weißwurst, andererseits einem herkömmlichen Knödel (Leberknödel, Semmelknödel, Brezenknödel etc.), unterscheidet sich jedoch von beiden deutlich sowohl hinsichtlich Geschmack als auch Konsistenz.

Weißwürste, die vor allem als Brotzeit beliebt sind, weisen für die Lagerhaltung und Zubereitung sowie den Verzehr trotz des allseits beliebten Geschmacks diverse Nachteile auf:
- Sie müssen frisch zubereitet und verzehrt werden und sind nur kurze Zeit mittels Kühlung lagerungsfähig. Ein Einfrieren und damit Haltbarmachen zu einer längeren Zeit führt zu einer starken Struktur- und auch Geschmacksveränderung und ist praktisch ausgeschlossen. Eine Vorratshaltung vor allem für den Endverbraucher ist dadurch kaum möglich.
- Die Weißwurst wird im Wasserbad erhitzt, bei zu schneller oder zu hoher Erhitzung, insbesondere falls das Wasser zum Kochen kommt, platzen die aus Naturdarm bestehenden Hüllen regelmäßig auf, und da dadurch die Weißwurst sofort einen verwässerten Geschmack erhält, nach kurzer Zeit nicht mehr verzehrfähig ist. Insbesondere in der Gastronomie können aufgeplatzte Weißwürste nicht serviert werden.
- Durch den hohen Fettgehalt der Weißwurst wird ein schnelles Sättigungs-Gefühl erzielt, so dass bei vielen Menschen ein Verzehr über ein oder zwei Weißwürste hinaus nicht als angenehm empfunden wird.
- Knödel werden bei Eigenproduktion im Haushalt nach der Herstellung der Knödelmasse im Wasserbad gegart, wobei Grundmasse, aber auch Zeitdauer und Temperatur des Garvorganges darüber entscheiden, ob der entstehende Knödel locker oder sehr hart wird. Die Knödelmasse selbst kann ebenfalls so gut wie gar nicht aufbewahrt werden, insbesondere eignet sich eine Tiefgefrorene Knödelmasse anschließend kaum mehr zur Herstellung und Zubereitung frischer Knödel, und
- einmal erhitzte, also gebrühte und damit verzehrfertige Knödel können zwar theoretisch danach wieder abgekühlt und auch eingefroren werden für die erneute Erwärmung und den Verzehr, leiden dann aber unter massiven Konsistenz- und Geschmacksveränderungen.

Darüber hinaus sind fertige Knödel, im gekühlten oder tiefgefrorenen Zustand, erhältlich, die in einer Hülle aufgenommen sind, für die Zubereitung jedoch aus der Hülle entnommen und konventionell im Wasserbad erhitzt werden.

Derartige Knödel unterscheiden sich sowohl von ihrer Zusammensetzung als auch von ihrer Konsistenz grundsätzlich von einer Weißwurst, indem sie zum einen von der Konsistenz her in der Regel wesentlich fester und härter als eine Weißwurst sind, indem sie einen wesentlich geringeren Wassergehalt aufweisen und auch einen geringeren Fettgehalt, da der Hauptbestandteil der Knödel- abhängig von der Knödelart - ein anderer ist als bei einer Weißwurst, jedenfalls kein Weißwurstbrät, sondern als Hauptbestandteil Backwaren (bei Semmelknödeln oder Brezenknödeln) oder Leberbrät (bei Leberknödeln).

### III. Darstellung der Erfindung

### a) Technische Aufgabe

Die Aufgabe der Erfindung besteht deshalb darin, ein Lebensmittel zu schaffen, welches thematisch Anklänge an die Weißwurst findet, hinsichtlich Zubereitung, Lagerhaltung und Verzehr Anklänge an übliche Knödel, gegenüber beiden jedoch ausreichende Handhabungsvorteile bietet und darüber hinaus einen möglichst geringeren Fettgehalt als eine Weißwurst.

### b) Lösung der Aufgabe

Diese Aufgabe wird durch die Ansprüche 1, 8 und 9 gelöst. Vorteilhafte Ausführungsformen ergeben sich aus den Unteransprüchen.

Durch die Druck-Begrenzung beim Abfüllen der Masse in die Hülle wird erreicht, dass die lockere und leichte Konsistenz der Masse auch im abgefüllten Zustand erhalten bleibt.

Da das Abfüllen bei einer Temperatur von unter 10°C erfolgt, also etwa im Temperaturbereich einer üblichen Lebensmittel-Kühlung, ist dies der AusgangsZustand für die spätere Aufbewahrung, in der weder die Hülle noch die darin enthaltene Masse einer voneinander abweichenden, Temperatur-bedingten Ausdehnung unterworfen sind.

Wird der abgepackte Knödel von dieser Abfülltemperatur aus später erhitzt auf zum Beispiel 80°C, so dehnt sich dadurch die Hülle stärker als die darin befindliche Masse, so dass es weder zu einem Aufplatzen der Hülle kommt noch zu einer Verfestigung der Masse in der Hülle durch ein verstärktes Zusammenpressen durch die Hülle.

Wird statt dessen von dieser Abfülltemperatur aus der abgepackte Knödel abgekühlt, zum Beispiel tiefgefrorenen, so kann es zwar sein, dass sich dabei die Hülle stärker zusammenziehen möchte als die temperaturbedingte Dehnung der darin enthaltenen Masse, jedoch ist zu diesem Zeitpunkt die Masse bereits gefroren und nicht mehr komprimierbar, und die Hülle ausreichend elastisch, um dabei nicht zu reißen, sondern sich zwangsweise dem Volumen des gefrorenen Knödels anzupassen.

Die Kunststofffolie, aus der die Hülle besteht, ist vorzugsweise schlauchförmig ausgebildet und weist eine möglichst hohe, insbesondere vollständige, Sauerstoffundurchlässigkeit und damit auch Luftundurchlässigkeit auf, wodurch die Haltbarkeits-Zeiträume im vor allem nicht-tiefgekühlten Zustand, stark erhöht werden auf drei bis vier Wochen, vor allem, wenn als Kunststoffhülle beispielsweise die Handelsware nola-shape der Firma Kalle verwendet wird.

Vorzugsweise handelt es sich um eine Folie, die bei Dehnung nur sehr geringe Rückstellkräfte entwickelt.

Erreicht wird dies z. B. durch einen Mehrschicht-Aufbau der Folie aus z. B. Polyamid-Schichten, zwischen denen sich eine Polyethylenschicht befindet.

Unter anderem weist die schlauchförmige Hülle, im Allgemeinen als Kunststoff-Sterildarm bezeichnet, in Querrichtung eine stärkere Temperaturschrumpfung auf als in Längsrichtung und ist ca. 50 µm dick.

Zum späteren Erhitzen der Knödel für den Verzehr werden diese wie bei Knödeln üblich in einem Wasserbad erhitzt. Dabei wird ohne dass die Folienumhüllung vorher nicht geöffnet wird und die Knödelmasse kommt mit dem Wasser nicht, in Berührung kommt und verwässert wird.

Dadurch können die Knödel auch über mehrere Stunden im heißen Wasserbad schwimmend aufbewahrt und auf Vorrat verzehrfertig gehalten werden, ohne dass Geschmack oder Konsistenz darunter leiden. Auch eine Verfärbung der aus dem Wasser ragenden Teile der Knödel ist nicht zu befürchten.

Dagegen erfolgt das Erhitzen der abgepackten Knödel bei der Herstellung, also das erste Garen der Knödel, wie üblich ebenfalls in heißem Wasser, bis die KernTemperatur der Knödel 80°C erreicht hat und dieser Zustand einige Minuten angedauert hat. Dabei werden die im Wasser schwimmenden Knödel entweder vollkommen unter der Wasseroberfläche gehalten und/oder das Wasserbad befindet sich in einem vorzugsweise druckdicht geschlossenen Gefäß und/oder die Knödel werden oberhalb der Wasseroberfläche zusätzlich mit Dampf von mindestens 120° C Temperatur beaufschlagt, um den Garprozess gleichmäßig und schnell zu beenden. Alternativ erfolgt das Erhitzen in einem Autoklav, insbesondere unter Überdruck, indem gleichzeitig mit Heißwasser berieselt und mit Dampf beaufschlagt wird, insbesondere bei etwa 120°C.

Die Knödelmasse besteht außer Weißwurstbrät aus einer Zusatzmasse, die mindestens 30 % besser mindestens 35% des gesamten Volumens der Knödelmasse ausmacht, und bei der eine oder mehrere Backwaren der Hauptbestandteil ist.

Vorzugsweise werden als Backwaren klein gehäckselte Brezen und/oder angeröstete Weißbrotwürfel, insbesondere Toast-Brotwürfel, verwendet.

Des Weiteren enthält die Zusatzmasse folgende Zutaten, wobei sich die ProzentAngaben auf die Volumenanteile im Hinblick auf die Zusatzmasse beziehen:
Rührei: 7 Prozent bis 8 Prozent der Zusatzmasse und/oder 2 Prozent bis 2,5 Prozent der Knödelmasse,
klein gehackte Zwiebeln: 10 Prozent bis 12 Prozent der Zusatzmasse und/oder 3,5 Prozent bis 4,5 Prozent der Knödelmasse,
zerlassene Butter: 3,5 Prozent bis 4,5 Prozent der Zusatzmasse und/oder 1 Prozent bis 2 Prozent der Knödelmasse,
auf 70° bis 80° erwärmte Milch: 21 Prozent bis 23 Prozent der Zusatzmasse und/oder 6 Prozent bis 8 Prozent der Knödelmasse,
Vollei: 14 Prozent bis 15 Prozent der Zusatzmasse und 4,5 Prozent bis 5,5 Prozent der Knödelmasse,
wobei die eingangs erwähnten Backwaren selbst bereits mindestens 11 Prozent der Zusatzmasse und 3 Prozent bis 4 Prozent der Knödelmasse ausmachen.

Darüber hinaus enthält die Zusatzmasse eine Gewürzmischung, die u. a. Ingwer, Knoblauch, vorzugsweise auch Muscatblüte und/oder Zitronenschalen und meist auch ein Gewürzsalz enthält.

Die Zubereitung der Knödelmasse erfolgt für das Weißwurstbrät und die Zusatzmasse jeweils separat, wobei die Zusatzmasse warm zubereitet wird, indem in die erwärmte Milch zunächst die zerlassene Butter eingerührt und in dieses Gemisch die übrigen Bestandteile der Zusatzmasse kurz eingerührt werden, mit insbesondere maximal 2 bis 10 Umdrehungen des Cutters im Mischgang.

Anschließend wird die Zusatzmasse auf 8° bis 10°C abgekühlt, und dann mit dem Weißwurstbrät vermengt, was mittels nur 1,5 bis maximal zwei Umdrehungen im Cutter im Mischgang geschieht.

Das Weißwurstbrät ist dabei konventionell zubereitet, jedoch sind vorzugsweise keinerlei Schwarten bei der Zubereitung verwendet, sondern deren übliche Gewichtsanteile durch Fleisch ersetzt.

### c) Ausführungsbeispiele

Ausführungsformen gemäß der Erfindung sind im Folgenden beispielhaft näher beschrieben. Es zeigen:

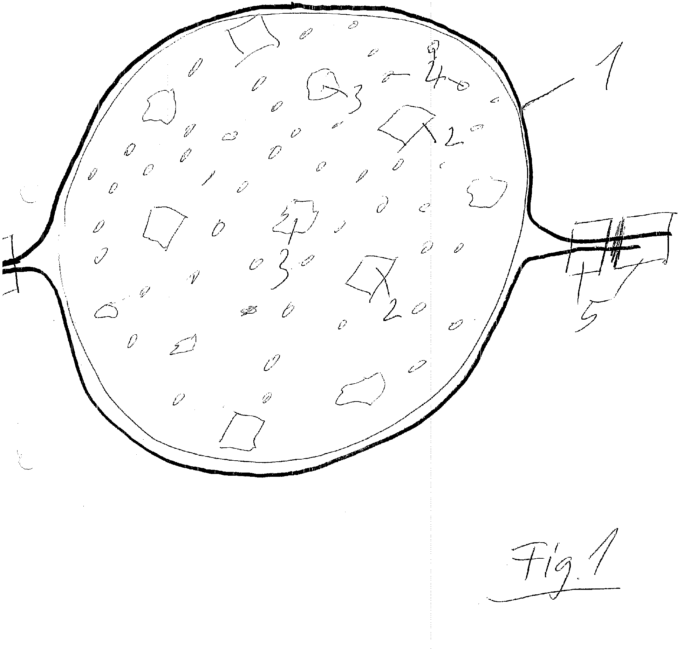

Fig. 1: einen Querschnitt durch einen abgepackten Knödel.

Zum einen ist dabei ersichtlich, wie durch Abclippen in den richtigen Abständen der schlauchförmigen Hülle 1 dazwischen etwa kugelförmige Knödel in der Hülle 1 entstehen.

Die Clipse 5 werden dabei immer doppelt, kurz hintereinander angeordnet, ohne Füllung im kurzen Abstand, um den Strang zwischen den Clippsen in einzelne Knödel auftrennen zu können, ohne die Hülle zu öffnen.

Hinsichtlich der Konsistenz der Knödel ist zu erkennen, dass die größeren Bestandteile nicht vollständig zerkleinert wurden:
So liegen vor allem die gerösteten Brotwürfel 2 und auch größere Flocken aus Rührei 3 noch möglichst unzerstört innerhalb der Knödelmasse vor.

Dazwischen befinden sich ebenfalls unzerstört in größerer Anzahl die wesentlich kleineren Brezen-Bruchstücke 4, die ebenfalls nicht vollständig angelöst oder aufgelöst sind, wohl aber von Flüssigkeit durchtränkt.

### BEZUGSZEICHENLISTE

- 1: Hülle
- 2: Brotwürfel
- 3: Rührei
- 4: Brezen-Bruchstück
- 5: Clips

## Patentansprüche

1. Verfahren zum Herstellen eines abgepackten Knödels aus unter anderem Fleischbrät mittels
- Herstellen der Knödelmasse,
- Abfüllen der Knödelmasse in eine schlauchförmige Hülle,
- Abbinden, insbesondere Abclippen der schlauchförmigen Hülle in definierten Abständen, insbesondere über das Gewicht definierten Abständen,
- Erhitzen der abgefüllten Knödel,
**dadurch gekennzeichnet, dass**
die Knödelmasse bei einem Druck von maximal 1,5 bar, insbesondere maximal 1,0 bar, insbesondere maximal 0,5 bar, insbesondere maximal 0,2 bar, insbesondere maximal 0,08 bar und einer Temperatur von unter 18°C, insbesondere 15°C, insbesondere 12°C in die Hülle gepresst und abgebunden, insbesondere abgeclippt, wird.

2. Verfahren nach Anspruch 1,
**dadurch gekennzeichnet, dass**
die Knödelmasse mit einem Druck von ca. 1/3 des Druckes, der beim Abfüllen von Wurst angewandt wird, in die Hülle gepresst wird.

3. Verfahren nach einem der vorhergehenden Ansprüche,
**dadurch gekennzeichnet, dass**
- als Hülle eine Kunststofffolie verwendet wird, die soweit als möglich Sauerstoffundurchlässig ist, und/oder insbesondere
- als Hülle eine Kunststofffolie verwendet wird, die zwischen -30°C und +130°C temperaturbeständig ist und eine Temperaturdehnung aufweist, die größer ist als die Volumenausdehnung der darin enthaltenen Knödelmasse und elastisch genug, um im Tiefgefrorenen Zustand der abgepackten Knödel nicht zu reißen.

4. Verfahren nach einem der vorhergehenden Ansprüche,
**dadurch gekennzeichnet, dass**
- das Erhitzen der abgefüllten Knödel im Wasserbad erfolgt, bis die Kerntemperatur der Knödel 80°C erreicht und dieser Zustand einige Minuten gehalten wird, und/oder insbesondere
- das Erhitzen der abgefüllten Knödel im Wasserbad entweder in einem geschlossenen Gefäß erfolgt oder bei vollkommen unter die Wasseroberfläche gehaltenen Knödeln oder durch zusätzliches Beaufschlagen mit Dampf, insbesondere von ca. 120°C Temperatur, von der Wasseroberfläche her, und/oder insbesondere
- das Erhitzen der abgefüllten Knödel in einem Berieselungs-Autoklav durch Berieseln mit Wasser und Beaufschlagen mit Dampf bei ca. 120°C erfolgt.

5. Verfahren nach einem der vorhergehenden Ansprüche,
**dadurch gekennzeichnet, dass**
- die Zusatzmasse der Knödelmasse vorab separat warm zubereitet wird, insbesondere beginnend bei 70 - 80 °C, und vor der Zugabe des Fleischbräts, insbesondere des Weißwurstbräts, abgekühlt wird auf 8 - 10°C, und/oder insbesondere
- die Zusatzmasse und das Fleischbrät im Cutter im Mischgang vermischt werden mit maximal 2, besser nur 1,5 Umdrehungen des Cutters insgesamt.

6. Verfahren nach einem der vorhergehenden Ansprüche,
**dadurch gekennzeichnet, dass**
- die Zusatzmasse hergestellt wird durch Shreddern von Brezen sowie Würfeln und Anrösten von Toastbrot, welche zusammen mit weiteren Bestandteilen und Vollei in ein Gemisch aus auf 70 - 80 °C erwärmte Milch und Butter eingerührt werden, und/oder insbesondere
- die abgefüllten und erhitzten Knödel auf 2° bis 5° abgekühlt werden.

7. Verfahren zum Zubereiten von in einer Hülle abgepackten Knödeln,
**dadurch gekennzeichnet, dass**
die Knödel zusammen mit der geöffneten Hülle im Wasserbad schwimmend erhitzt werden mindestens auf Verzehrtemperatur.

8. Knödel, der Weißwurstbrät enthält,
**dadurch gekennzeichnet, dass**
die Knödelmasse in mehr als 25% ihres Volumens aus einer Zusatzmasse besteht, bei der eine Backware, insbesondere Brezen, einer der Hauptbestandteile ist.

9. Knödel, der Weißwurstbrät enthält,
**dadurch gekennzeichnet, dass**
der gegarte Knödel in einer Kunststoffhülle aufgenommen ist.

10. Knödel nach einem der vorhergehenden Produktansprüche,
**dadurch gekennzeichnet, dass**
- die Zusatzmasse mehr als 30%, insbesondere ein Drittel, des Volumens der Knödelmasse beträgt, und/oder insbesondere
- es sich bei den Backwaren um geschredderte Brezen handelt, die einen Volumenanteil von 28 % - 29 % der Zusatzmasse und/oder von 9 % - 10 % der Knödelmasse beträgt, und/oder insbesondere
- die Backware gewürfeltes und angeröstetes Toastbrot ist, mit insbesondere einem Volumenanteil von 11 % - 12 % der Zusatzmasse und/oder von 3 % - 4 % der Knödelmasse ausmacht.

11. Knödel nach einem der vorhergehenden Produktansprüche,
**dadurch gekennzeichnet, dass**
- die Zusatzmasse Rührei enthält, das 7 % - 8 % der Zusatzmasse und/oder von 2 % - 2,5 % der Knödelmasse ausmacht, und/oder insbesondere
- die Zusatzmasse klein gehackte Zwiebeln enthält, die 10 % - 12 % der Zusatzmasse und/oder von 3,5 % - 4,5 % der Knödelmasse ausmachen, und/oder insbesondere
- die Zusatzmasse zerlassene Butter enthält, die 3,5 % - 4,5 % der Zusatzmasse und/oder von 1 % - 2 % der Knödelmasse ausmacht.

12. Knödel nach einem der vorhergehenden Produktansprüche,
**dadurch gekennzeichnet, dass**
- die Zusatzmasse auf insbesondere 70- 80 °C erwärmte Milch enthält, die 21 % - 23 % der Zusatzmasse und/oder von 6 % - 8 % der Knödelmasse ausmacht, und/oder insbesondere
- das die Zusatzmasse Vollei enthält, die 14% bis 15% der Zusatzmasse und/oder 4,5% bis 5.5% der Knödelmasse ausmacht, und/oder insbesondere
- die Zusatzmasse eine Gewürzmischung enthält, die insbesondere Knoblauch, Ingwer, Curcuma, Salz und Petersilie umfasst.

13. Knödel nach Anspruch 12,
**dadurch gekennzeichnet, dass**
- die Gewürzmischung zusätzlich Muskatblüte und/oder Zitronenschalen umfasst, und/oder insbesondere
- die Gewürzmischung zusätzlich ein Gewürzsalz umfasst.

14. Knödel nach einem der vorhergehenden Produktansprüche,
**dadurch gekennzeichnet, dass**
- die Hülle der Knödel eine Kunststofffolie, insbesondere ein Kunststoff-Sterildarm, insbesondere eine schlauchförmige Kunststofffolie mit möglichst geringer Sauerstoffdurchlässigkeit, insbesondere vollständiger Sauerstoffundurchlässigkeit, ist, und/oder insbesondere
- als Hülle eine Kunststofffolie verwendet wird, die zwischen -30°C und +130°C temperaturbeständig ist und eine Temperaturdehnung aufweist, die größer ist als die Volumenausdehnung der darin enthaltenen Knödelmasse und elastisch genug, um im Tiefgefrorenen Zustand der abgepackten Knödel nicht zu reißen, und/oder insbesondere
- die Kunststofffolie aus hochpolymerem Material, insbesondere aus Schichtmaterial besteht und insbesondere aus zwei Polyamidschichten, zwischen denen eine Dritte Polyethylenschicht angeordnet ist.

15. Knödel nach einem der vorhergehenden Produktansprüche,
**dadurch gekennzeichnet, dass**
- die Dicke der Kunststofffolie 40 µm beträgt, und/oder insbesondere
- die Kunststoffhülle in Querrichtung stärker schrumpft als in Längsrichtung der schlauchförmigen Hülle bei Druck und/oder Temperaturbelastung, und/oder insbesondere
- die Kunststofffolie bei einer Dehnung nur sehr geringer Rückstellkräfte aufgrund der Eigenelastizität entwickelt.
